Europäisches Patentamt

European Patent Office

Office européen des brevets

(11) Numéro de publication: **0 022 597**
**A1**

## (12) DEMANDE DE BREVET EUROPEEN

(21) Numéro de dépôt: **80200651.0**

(22) Date de dépôt: **04.07.80**

(51) Int. Cl.³: **C 01 B 11/06**, G 05 D 21/02

---

(30) Priorité: **16.07.79 FR 7918548**

(43) Date de publication de la demande: **21.01.81**
**Bulletin 81/3**

(84) Etats contractants désignés: **AT BE CH DE FR GB IT LI NL SE**

(71) Demandeur: **SOLVAY & Cie (Société Anonyme), Rue du Prince Albert, 33, B-1050 Bruxelles (BE)**

(72) Inventeur: **Glineur, Willy, Rue Frédéric Mohrfeld 45, B-1090 Bruxelles (BE)**

(74) Mandataire: **Eischen, Roland, Solvay & Cie Département de la Propriété Industrielle Rue de Ransbeek 310, B-1120 Bruxelles (BE)**

(54) **Procédé et installation pour la fabrication de solutions aqueuses d'hyprochlorite de métal alcalin.**

(57) L'invention concerne un procédé et une installation pour la fabrication de solutions aqueuses d'hypochlorite de métal alcalin. L'installation comprend une chambre de réaction dans laquelle on fait réagir du chlore sur une solution d'hydroxyde de métal alcalin et un dispositif de régulation conçu pour régler les poids relatifs de chlore et d'hydroxyde de métal alcalin de la réaction en fonction de la dérivée, par rapport au temps, du potentiel d'oxydoréduction de la réaction, modulée par une grandeur instantanée de ce potentiel.

L'invention s'applique à la fabrication de solutions aqueuses d'hypochlorite de sodium.

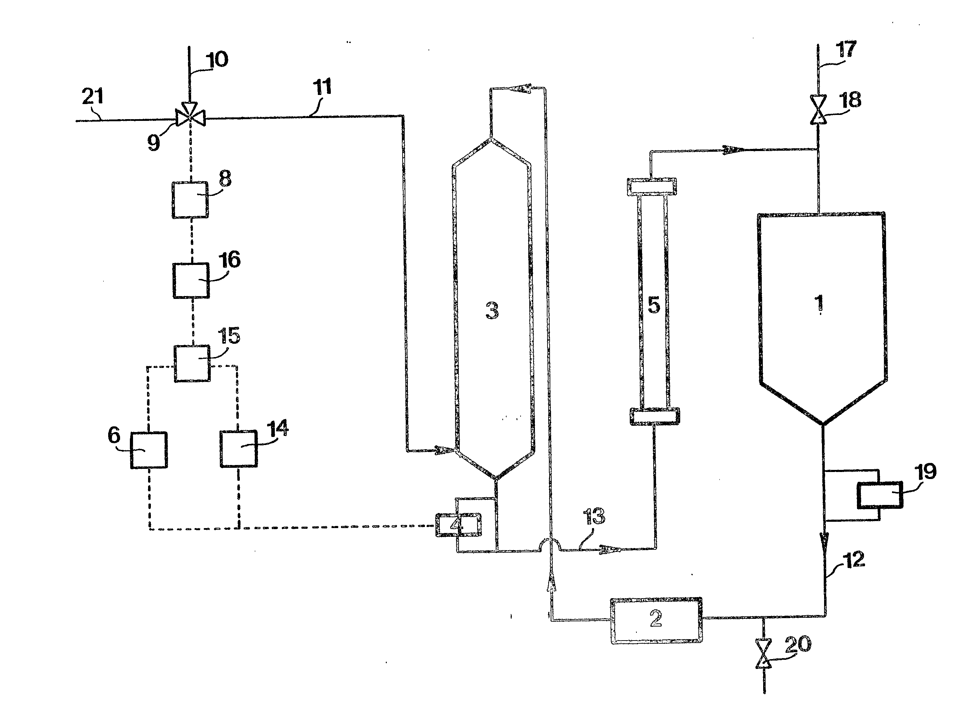

Figure unique.

— 1 —

## Procédé et installation pour la fabrication de solutions aqueuses d'hypochlorite de métal alcalin

Cas S.79/13

SOLVAY & Cie (Société Anonyme)

La présente invention a pour objet la fabrication de solutions aqueuses d'hypochlorite de métal alcalin et plus particulièrement d'hypochlorite de sodium.

Un procédé communément utilisé pour fabriquer des solutions aqueuses d'hypochlorite de métal alcalin consiste à faire réagir du chlore gazeux sur une solution aqueuse d'hydroxyde de métal alcalin, selon la réaction générale :

$$Cl_2 + 2NaOH \longrightarrow NaClO + NaCl + H_2O$$

La mise en oeuvre de ce procédé connu est délicate, à cause du caractère généralement instable des solutions d'hypochlorite de métal alcalin.

Pour éviter une décomposition accélérée des solutions d'hypochlorite de métal alcalin, il est nécessaire de maintenir en permanence un excès substantiel d'hydroxyde de métal alcalin dans le mélange réactionnel. Cette condition est difficile à respecter dans le cas où le procédé est réalisé de façon discontinue. Dans l'exécution du procédé discontinu, on fait en effet circuler une solution aqueuse d'hydroxyde et d'hypochlorite de métal alcalin en navette entre un réservoir contenant une solution aqueuse d'hydroxyde de métal alcalin et une chambre de réaction alimentée en chlore ; la solution dans la chambre de réaction s'enrichit ainsi progressivement en hypochlorite de métal alcalin et il convient dès lors de contrôler sa composition en permanence et avec précision, de manière à réduire à temps le débit de chlore et à l'annuler dès que la teneur en hydroxyde de métal alcalin dans le mélange réactionnel tombe sous une valeur critique prédéterminée.

Pour contrôler l'évolution du pH ou de la teneur en hydroxyde de métal alcalin dans le mélange réactionnel, on a proposé dans le brevet belge 605 926 du 10 juillet 1961 au nom de la Demanderesse, de suivre l'évolution de la dérivée, par rapport au temps, du potentiel d'oxydoréduction du mélange réactionnel.

Cette méthode de contrôle connue s'est avérée précise et fiable dans le cas d'installations à fonctionnement régulier, alimentées par des débits réglés de chlore et d'hydroxyde de métal alcalin. Elle est toutefois mal adaptée au contrôle du procédé de fabrication d'hypochlorite de métal alcalin dans des installations à fonctionnement irrégulier, telles que des installations dans lesquelles l'alimentation en chlore subit des perburbations incontrôlées. C'est généralement le cas des installations qui sont alimentées par du chlore résiduaire provenant de la liquéfaction du chlore produit dans les cellules d'électrolyse de saumure de chlorure de sodium. De telles perburbations incontrôlées dans l'alimentation de chlore, qui peuvent parfois être importantes, sont souvent à l'origine de variations correspondantes de la dérivée du potentiel d'oxydoréduction du mélange réactionnel, même lorsque la teneur en hydroxyde de métal alcalin dans celui-ci est élevée. Ces perburbations risquent, dans certains cas, d'agir défavorablement sur la régulation du fonctionnement de l'installation, par exemple en annulant intempestivement le débit d'admission de chlore dans la chambre de réaction.

L'invention vise à remédier aux difficultés précitées. Elle vise plus spécialement à fournir un procédé et une installation pour la fabrication de solutions aqueuses d'hypochlorite de métal alcalin, dans lesquels l'avancement de la réaction du chlore sur la solution aqueuse d'hydroxyde de métal alcalin est suivi à tout moment par une méthode de contrôle précise, fiable et indépendante de variations accidentelles dans les débits et les compositions des courants de chlore et de solution d'hydroxyde de métal alcalin.

L'invention concerne dès lors un procédé de fabrication de solutions aqueuses d'hypochlorite de métal alcalin, selon lequel on fait réagir du chlore sur une solution aqueuse d'hydroxyde de métal alcalin, et on règle les poids relatifs de chlore et d'hydroxyde de métal alcalin de la réaction suivant une fonction du potentiel d'oxydoréduction de la réaction ; selon l'invention, la fonction du potentiel d'oxydoréduction de la réaction est la dérivée, par rapport au temps, du potentiel d'oxydoréduction, modulée par une grandeur instantanée dudit potentiel d'oxydoréduction.

Dans le procédé selon l'invention, les sources de chlore et d'hydroxyde de métal alcalin ne sont pas critiques.

La solution aqueuse d'hydroxyde de métal alcalin peut par exemple être obtenue par électrolyse d'une saumure de chlorure de métal alcalin dans une cellule à cathode de mercure ou dans une cellule à membrane échangeuse d'ions, à perméabilité sélective.

Le chlore peut également être obtenu par électrolyse d'une saumure de chlorure de métal alcalin dans une cellule à cathode de mercure ou dans une cellule à diaphragme perméable ou à membrane à perméabilité sélective.

Le procédé selon l'invention est toutefois bien adapté à utiliser, comme source de chlore, des mélanges gazeux résiduaires contenant du chlore, notamment les mélanges gazeux résiduaires de la liquéfaction de chlore produit par électrolyse des saumures de chlorure de sodium.

Le potentiel d'oxydoréduction de la réaction du chlore sur la solution aqueuse d'hydroxyde de métal alcalin est une notion bien connue en technique. Il est habituellement mesuré au moyen d'une cellule électrochimique comprenant une électrode de mesure en un métal ou alliage inattaquable, par exemple en platine, et une électrode de référence (généralement une électrode au calomel saturé), immergées au voisinage l'une de l'autre dans le bain de réaction.

Le calcul de la dérivée du potentiel d'oxydoréduction par rapport au temps ne présente pas de difficulté et peut être exécuté à tout moment de manière automatique par des calculateurs analogiques ou numériques.

Dans le procédé selon l'invention, le choix de la fonction mathématique selon laquelle on module la dérivée du potentiel d'oxydoréduction est imposé par le choix de la grandeur instantanée précitée du potentiel d'oxydoréduction. D'une manière générale, la modulation choisie doit être telle que sa réponse soit peu influencée par des fluctuations accidentelles survenant dans le débit du chlore ou de la solution d'hydroxyde de métal alcalin. Selon la grandeur choisie pour exprimer le potentiel d'oxydoréduction, la modulation peut par exemple être une multiplication, une division ou une fonction exponentielle.

Dans un mode aisé de mise en oeuvre du procédé selon l'invention, la grandeur choisie pour exprimer le potentiel d'oxydoréduction est le potentiel d'oxydoréduction lui-même exprimé par exemple en mV, tel qu'il est mesuré par la cellule de mesure électrochimique décrite plus haut.

Selon une forme d'exécution préférée de l'invention, la grandeur choisie pour exprimer le potentiel d'oxydoréduction est l'antilogarithme du potentiel d'oxydoréduction de la réaction. Des variations du pH du mélange réactionnel produisent en effet des variations correspondantes, généralement importantes de l'antilogarithme du potentiel d'oxydoréduction, de sorte que ce mode d'exécution préféré du procédé selon l'invention apporte l'avantage d'augmenter la sensibilité du contrôle de la réaction.

Dans le cas particulier ou la grandeur choisie pour exprimer le potentiel d'oxydoréduction est le potentiel lui-même ou son antilogarithme, la modulation choisie est de préférence une multiplication.

Dans cette forme d'exécution préférée du procédé selon l'invention, on règle généralement l'alimentation de chlore et de solution aqueuse d'hydroxyde de métal alcalin dans le mélange réactionnel, pour que le résultat de la multiplication du potentiel d'oxydoréduction ou de son antilogarithme par la dérivée du potentiel d'oxydoréduction soit à tout instant inférieur à une valeur de consigne prédéterminée. Celle-ci correspond généralement à une valeur critique du pH ou de la teneur en hydroxyde de sodium dans le mélange réactionnel, au-delà de laquelle la stabilité des solutions d'hypochlorite de métal alcalin devient insuffisante pour les applications auxquelles on les destine, ainsi que pour leur manutention ou leur stockage.

On choisit habituellement des valeurs de consigne qui correspondent à des valeurs de pH dans le mélange réactionnel au moins égales à 12 et de préférence comprises entre 12,2 et 12,6.

Pour la mise en oeuvre du procédé selon l'invention, on utilise avantageusement une installation comprenant, d'une part, une chambre de réaction en communication avec un conduit d'admission de chlore, un conduit d'admission d'une solution aqueuse d'hydroxyde de métal alcalin et un conduit d'évacuation d'une solution aqueuse d'hypochlorite de métal alcalin et, d'autre part, un organe de réglage motorisé des débits relatifs de chlore et d'hydroxyde de métal alcalin, couplé à un dispositif de régulation comprenant une cellule de mesure du potentiel d'oxydoréduction de la solution d'hypochlorite de métal alcalin et un circuit analogique de la dérivée, par rapport au temps du potentiel mesuré par la cellule ; selon l'invention, le dispositif de régulation comprend en outre un circuit analogique de la fonction antilogarithmique dudit potentiel et un multiplicateur analogique des signaux respectifs des deux circuits analogiques.

Dans l'installation selon l'invention, la chambre de réaction n'est pas critique ; elle peut avantageusement consister en une colonne verticale à empilages.

- 6 -

L'organe de réglage des débits respectifs de chlore et de solution d'hydroxyde de sodium consiste généralement en une vanne montée sur le conduit d'admission de la solution d'hydroxyde de sodium ou, plus généralement, sur le conduit d'admission de chlore, comme décrit dans les brevets belges 605 926 du 10 juillet 1961, 610 753 du 24 novembre 1961 et 617 794 du 17 mai 1962, tous les trois au nom de la Demanderesse. L'entraînement de la vanne peut être réalisé par exemple au moyen d'un moteur à fonctionnement électrique, hydraulique ou pneumatique. Le dispositif de régulation a pour fonction de commander la manoeuvre de l'organe de réglage en fonction de la valeur du pH dans la solution d'hypochlorite de métal alcalin.

Dans le dispositif de régulation, la cellule électrochimique pour la mesure du potentiel d'oxydoréduction est du type de celle décrite plus haut. Elle est localisée dans la chambre de réaction ou dans le conduit d'évacuation de la solution d'hypochlorite de sodium.

Les circuits analogiques de dérivée et de fonction antilogarithmique sont bien connus en technique. Le circuit de dérivée a pour fonction d'émettre un signal proportionnel à la dérivée du potentiel d'oxydoréduction par rapport au temps ; le circuit antilogarithmique a pour fonction d'émettre un signal proportionnel à l'antilogarithme du potentiel d'oxydoréduction.

Le multiplicateur analogique est également un circuit analogique bien connu en soi. Il a pour fonction de moduler le signal émis par le circuit de dérivée en le multipliant par le signal émis par le circuit antilogarithmique, le signal résultant étant transmis au moteur de l'organe de réglage, éventuellement par l'intermédiaire d'un amplificateur.

Le procédé et l'installation selon l'invention s'appliquent à la fabrication de solutions aqueuses d'hypochlorite de métal alcalin, et plus spécialement de solutions d'hypochlorite de sodium, indifféremment par la voie continue ou par la voie discontinue.

Dans le cas de la fabrication par la voie continue, on alimente la chambre de réaction en permanence avec une solution aqueuse d'hydroxyde de métal alcalin et on évacue immédiatement la solution aqueuse d'hypochlorite de métal alcalin soutirée hors de ladite chambre. Dans un tel mode d'exécution de l'invention, il convient de régler les débits respectifs de la solution d'hydroxyde de sodium et de chlore pour que la solution d'hypochlorite de métal alcalin que l'on soutire hors de la chambre de réaction soit utilisable telle quelle et présente dès lors des valeurs de pH et de concentration en hypochlorite, qui soient compatibles avec l'usage auquel on la destine.

Dans le cas de la fabrication par la voie discontinue, on fait circuler une solution aqueuse d'hypochlorite de métal alcalin et d'hydroxyde de métal alcalin en navette entre la chambre de réaction et un réservoir contenant une solution d'hydroxyde de métal alcalin, et on vide l'installation dès que la solution circulant en navette présente des valeurs de pH et de concentration en hypochlorite de métal alcalin qui soient compatibles avec l'usage auquel on la destine.

Des particularités et détails de l'invention ressortiront de la description suivante de la figure unique du dessin annexé, qui représente schématiquement une forme de réalisation particulière de l'installation selon l'invention.

L'installation représentée à la figure est conçue pour fonctionner selon la voie discontinue. Elle comprend à cet effet une chambre de réaction 3, un collecteur de chlore 10 et un réservoir 1 destiné à contenir, au démarrage de l'installation, une solution aqueuse d'hydroxyde de sodium.

La chambre de réaction 3 est avantageusement une colonne à empilages. Elle est reliée d'une part au collecteur de chlore 10 via une vanne 9 à trois voies et un conduit 11 et, d'autre part, au réservoir 1, via une boucle comprenant une pompe de circulation 2, un réfrigérant 5 et les conduits 12 et 13.

Le moteur d'entraînement 8 de la vanne 9 est couplé à un dispositif de régulation qui comprend une cellule de mesure électrochimique 4 du potentiel d'oxydoréduction, montée en dérivation sur le conduit 13 en aval de la chambre de réaction 3, un dérivateur analogique 6 et un circuit antilogarithmique 14 reliés à la cellule de mesure 4, un multiplicateur analogique 15 relié au dérivateur 6 et au circuit antilogarithmique 14 et un amplificateur 16 du signal émis par le multiplicateur 15 et transmis au moteur 8.

Avant le démarrage de l'installation, on remplit le réservoir 1, d'une solution aqueuse concentrée d'hydroxyde de sodium, via la conduite d'admission 17, puis on obture la vanne 18.

On démarre ensuite la pompe 2 et on manoeuvre la vanne 9 de manière que la totalité du débit de chlore provenant du collecteur 10 soit envoyé au pied de la chambre de réaction 3, via le conduit 11.

La solution d'hydroxyde de sodium circulant en navette entre la chambre de réaction 3 et le réservoir 1 s'enrichit progressivement en hypochlorite de sodium, et son potentiel d'oxydoréduction est mesuré en permanence à la sortie de la chambre 3 par la cellule de mesure électrochimique 4.

Le potentiel mesuré par la cellule 4 est traité par le dérivateur 6 et par le circuit 14 qui émettent simultanément un signal proportionnel à sa dérivée par rapport au temps et un signal proportionnel à son antilogarithme. Les signaux émis par les circuits 6 et 14 sont introduits dans le multiplicateur 15 où ils sont multipliés l'un par l'autre.

Au début d'un cycle de fonctionnement de l'installation, le potentiel d'oxydoréduction est très faible et varie peu, même dans le cas où le débit de chlore dans le collecteur 10 vient à subir des variations intempestives, non contrôlées. Le signal émis par le multiplicateur analogique 15 et transmis au moteur 8 est dès lors insuffisant pour actionner celui-ci, de sorte que la vanne 9 reste ouverte au maximum sur le conduit 11.

Lorsque le pH de la solution sortant de la chambre de réaction 3 approche de la valeur critique à partir de laquelle la stabilité de la solution d'hypochlorite de sodium devient insuffisante (par exemple pH = 12,3), le potentiel mesuré par la cellule 4 est plus élevé et il subit par ailleurs des variations sensibles si le pH vient à changer ; le signal transmis au moteur 8 est dès lors suffisamment perceptible pour qu'il manoeuvre la vanne 9 en sorte de réduire le débit de chlore dans le conduit 11 jusqu'à l'annuler lorsque le pH atteint la valeur critique. La valeur critique du pH peut être atteinte dans la chambre de réaction 3, non seulement à la fin du cycle de fonctionnement mais aussi dans le cas d'un incident de marche conduisant à une augmentation subite et non prévue du débit de chlore dans le collecteur 10.

Une seconde cellule de mesure électrochimique de potentiel 19, branchée en dérivation sur le conduit 12 sortant du réservoir 1, permet d'apprécier la fin du cycle de fonctionnement. A ce moment, on arrête la pompe 2, on manoeuvre la vanne 20 pour vidanger l'installation, puis on remplit le réservoir 1 avec une nouvelle charge de solution d'hydroxyde de sodium, avant de démarrer un nouveau cycle de fonctionnement.

Selon une forme de réalisation avantageuse de l'invention, non représentée, la troisième branche 21 de la vanne 9 est reliée à la chambre de réaction d'une seconde installation de fabrication d'hypochlorite de sodium, similaire à celle qui vient d'être décrite. Le fonctionnement des deux installations couplées à la vanne 9 est alors réglé de manière qu'à la fin d'un cycle de fonctionnement d'une installation corresponde le début d'un cycle de fonctionnement de l'autre installation.

0022597

- 10 -

<u>R E V E N D I C A T I O N S</u>

1 - Procédé de fabrication de solutions aqueuses d'hypochlorite de métal alcalin, selon lequel on fait réagir du chlore sur une solution aqueuse d'hydroxyde de métal alcalin et on règle des poids relatifs de chlore et d'hydroxyde de métal alcalin de la réaction suivant une fonction du potentiel d'oxydoréduction de la réaction, caractérisé en ce que la fonction du potentiel d'oxydoréduction est la dérivée, par rapport au temps, du potentiel d'oxydoréduction, modulée par une grandeur instantanée dudit potentiel d'oxydoréduction.

2 - Procédé selon la revendication 1, caractérisé en ce que la grandeur instantanée du potentiel d'oxydoréduction est son antilogarithme.

3 - Procédé selon la revendication 1 ou 2, caractérisé en ce que la fonction du potentiel d'oxydoréduction est la dérivée du potentiel d'oxydoréduction multipliée par le potentiel d'oxydoréduction ou par l'antilogarithme de celui-ci.

4 - Procédé selon la revendication 3, caractérisé en ce qu'on règle les poids de chlore et d'hydroxyde de sodium de la réaction pour que la dérivée du potentiel d'oxydoréduction multipliée par le potentiel d'oxydoréduction ou par l'antilogarithme dudit potentiel soit, à tout instant, inférieure à une valeur critique prédéterminée.

5 - Procédé selon la revendication 4, caractérisé en ce qu'on choisit la valeur critique pour qu'il y corresponde, dans la solution d'hypochlorite de métal alcalin, un pH au moins égal à 12.

6 - Procédé selon la revendication 5, caractérisé en ce qu'on choisit la valeur critique pour qu'il y corresponde, dans la solution d'hypochlorite de métal alcalin, un pH compris entre 12,2 et 12,6.

7 - Installation pour la fabrication de solutions aqueuses d'hypochlorite de métal alcalin, comprenant, d'une part, une chambre de réaction (3) en communication avec un conduit d'admission de chlore (10,11), un conduit d'admission d'une solution aqueuse d'hydroxyde de métal alcalin (12) et un conduit d'évacuation d'une solution aqueuse d'hypochlorite de métal alcalin (13) et, d'autre part, un organe de réglage motorisé (8,9) des débits relatifs de chlore et d'hydroxyde de métal alcalin, couplé à un dispositif de régulation comprenant une cellule de mesure du potentiel d'oxydoréduction de la solution d'hypochlorite de métal alcalin (4) et un circuit analogique (6) de la dérivée, par rapport au temps, du potentiel mesuré par la cellule, caractérisée en ce que le dispositif de régulation comprend en outre un circuit analogique (14) de la fonction antilogarithmique du potentiel mesuré par la cellule et un multiplicateur analogique (15) des signaux respectifs des deux circuits analogiques.

8 - Installation selon la revendication 7, caractérisée en ce que la cellule de mesure (4) est montée dans le circuit d'évacuation (13) de la solution d'hypochlorite de métal alcalin.

9 - Installation selon la revendication 7 ou 8, caractérisée en ce que l'organe de réglage des débits relatif de chlore et d'hydroxyde de métal alcalin comprend une vanne (9) montée sur le conduit d'admission de chlore (10,11).

0022597

**Office européen des brevets**

## RAPPORT DE RECHERCHE EUROPEENNE

| | DOCUMENTS CONSIDERES COMME PERTINENTS | | | CLASSEMENT DE LA DEMANDE (Int. Cl. 3) |
|---|---|---|---|---|
| Catégorie | Citation du document avec indication, en cas de besoin, des parties pertinentes | Revendication concernée | | C 01 B 11/06 G 05 D 21/02 |
| D | FR - A - 1 327 699 (SOLVAY) <br><br> * Page 6, résumé 1 et 2 * <br><br> -- | 1 | | |
| A | US - A - 3 702 234 (PAVIA) | | | |
| A | JOURNAL OF THE ELECTROCHEMICAL SOCIETY, vol. 97, no. 8, 1950 PRINCETON (US) P.J. PYE: "The Control of Bleach Manufacture by Oxidation Potential" pages 245-248 | | | **DOMAINES TECHNIQUES RECHERCHES (Int. Cl. 3)** C 01 B 11/06 G 05 D 21/02 |
| A | CHEMICAL ABSTRACTS, vol. 86, no. 14, 4 avril 1977, page 186, colonne 1, abrégé 92680y COLUMBUS, Ohio (US) <br><br> & SU - A - 538 984 (ZOBNIN et al.) (15 décembre 1976) <br><br> ------- | | | |

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 16-10-1980 | V. BELLINGEN |

OEB Form 1503.1 06.78